# EUROPEAN PATENT SPECIFICATION

(11) **EP 1 270 522 B1**
(45) Date of publication and mention of the grant of the patent: **28.01.2004**
(21) Application number: 02003561.4
(22) Date of filing: 15.02.2002
(51) Int. Cl.: C03B 37/014, C03C 25/00

(54) **Method for fabricating optical fiber from preforms, using control of the partial pressure of oxygen during preform dehydration**
Verfahren zum Herstellen von optischen Fasern aus Vorformen mittels Regulierung des Partialdrucks des Sauerstoffes während der Dehydratisierung der Vorform
Procédé de fabrication des fibres optiques à partir d'une préforme, comportant un réglage de la pression partielle d'oxygène pendant la déshydratation de la préforme

(30) Priority: 26.06.2001 US 891900
(43) Date of publication of application: 02.01.2003
(73) Proprietor: FITEL USA CORPORATION (a Delaware Corporation), Norcross, Georgia 30071 (US)
(72) Inventor: Chang, Kai H., Suwanee, Georgia 30024 (US); Kalish, David, Roswell, Georgia 30076 (US); Miller, Thomas John, Alpharetta, Georgia 30022 (US)
(74) Representative: Schoppe, Fritz, Dipl.-Ing.

(56) References cited:
- EP-A- 0 622 343
- PATENT ABSTRACTS OF JAPAN vol. 16, no. 40, 31 January 1992 (1992-01-31) & JP 03 247523 A (ASAHI GLASS CO LTD), 5 November 1991 (1991-11-05)
- PATENT ABSTRACTS OF JAPAN vol. 12, no. 37, 4 February 1988 (1988-02-04) & JP 62 187127 A (NT&T CORP), 15 August 1987 (1987-08-15)
- DATABASE WPI Section Ch, Week 49 Derwent Publications Ltd., London, GB; Class L01, AN 1985-307901 XP002213519 & JP 60 215538 A (FUJIKURA CABLE WORKS LTD ET AL), 28 October 1985 (1985-10-28)
- DATABASE WPI Section Ch, Week 27 Derwent Publications Ltd., London, GB; Class L01, AN 1985-161558 XP002213520 & JP 60 090853 A (FURUKAWA ELECTRIC CO LTD), 2 May 1985 (1985-05-02)

## Description

### Background of the Invention

### 1. Field of the Invention

The invention relates to optical fiber. More particularly, the invention relates to fabricating optical fibers having improved transmission characteristics.

### 2. Description of the Related Art

Optical fibers typically are fabricated by heating and drawing a portion of an optical preform usually comprising a solid glass rod with a refractive glass core surrounded by a protective glass cladding having a lower refractive index than that of the core. The glass fiber then is coated with one or more layers of protective coating materials that are cured, for example, by radiation.

Conventionally, several processes exist for fabricating optical preforms, including modified chemical vapor deposition (MCVD), vapor axial deposition (VAD) and outside vapor deposition (OVD). In conventional VAD and OVD processes, layers of glass particles or "soot" are deposited on the end surface or the outside surface, respectively, of a starter rod. The deposited soot layers then are dried or dehydrated, for example, in a chlorine or fluorine-containing atmosphere, and sintered or consolidated to form a solid preform core rod.

Once the preform core rod is formed, optical fiber is drawn directly therefrom or, alternatively, one or more overclad layers are formed thereon prior to drawing optical fiber therefrom. The overclad layers are formed on the preform core rod, for example, by a soot deposition technique similar to that used in forming the preform core rod. Alternatively, the overclad layers are formed by collapsing a silica-based tube or sleeve around the preform core rod. Such process typically is referred to as the Rod-In-Tube (RIT) process. See, for example, US-A-4,820,322.

The transmission characteristics of optical fiber vary based on a number of factors, including, for example, scattering such as Rayleigh scattering, fiber bending and absorption such as hydroxyl-ion (OH) absorption. OH absorption, or "water" absorption, is of particular interest because it reduces useful bandwidth in an otherwise relatively low transmission loss wavelength region from 700-1600 nanometers (nm), that is, the wavelength region in which many current optical systems operate.

OH absorption, which is due to vibrational overtones of hydroxyl-ions in the fiber, typically causes three loss peaks within the 700-1600 nm region: 950 nm, 1240 nm, and 1385 nm. It has been desirable to reduce these water loss peaks, particularly the water loss peak centered around 1385 nm, since concentrations of OH as low as 1 part per million (ppm) can cause losses as great as 65 dB/km at 1385 nm in single mode fibers. Furthermore, reduction of the water loss peak at 1385 nm effectively provides an uninterrupted region of relatively low transmission loss from 1200-1600 nm. The wavelength region from 1200-1600 nm is of special interest because of the abundant availability of light sources such as Indium Phosphide (InP) -based sources. See, for example, US-A-6,131,415).

Another type of absorption loss that is sought to be reduced or eliminated is aging loss including the hydrogen aging loss that occurs during the lifetime of the fiber. Such losses are thought to occur because of the chemical reaction between various defects in the optical fiber and hydrogen in the optical fiber environment, for example, within an optical fiber cable environment. Such defects include, for example, germanium (Ge) defects and silicon (Si) defects introduced into the optical fiber during its fabrication.

It would be desirable to have available a method for making optical fibers, including single mode optical fibers, that have reduced aging or hydrogen aging loss over the life of the fiber and optical fiber systems including such optical fibers.

### Summary of the Invention

The invention is as defined by claims 1 and 8. Embodiments of the invention include a method for making optical fibers that have reduced aging loss, hydrogen aging and other losses over the life of the fiber, and optical systems including such optical fibers. Embodiments of the invention provide improved conditions in fiber manufacturing environments to reduce the likelihood of generating defects in optical fiber preforms that, in optical fiber drawn therefrom, attract and bond with hydrogen atoms to form molecules that increase transmission loss in the fiber. The improved conditions include the establishment and adjustment of the oxygen stoichiometry in one or more of the environments in which optical fiber manufacturing process steps occur.

The method for making optical fibers according to embodiments of the invention includes the steps of manufacturing an optical fiber preform, drawing fiber from the preform, accelerating the aging of a representative portion of the drawn optical fiber, testing the transmission performance of the aged fiber, and adjusting the oxygen stoichiometry of one or more of the process step environments for subsequent manufacture of optical fiber. The optical fiber preform is manufactured, for example, by forming a glass core rod, dehydrating the glass core rod in an oxygen/chlorine and/or oxygen/fluorine atmosphere, consolidating the glass core rod, and forming an overclad region around the glass core rod. One method for forming the overclad region is to deposit glass-forming soot onto the core glass rod, dehydrate the deposited soot particles, and consolidate the dehydrated soot particles. According to embodiments of the invention, the oxygen stoichiometry of the environments of one or more of the process steps is adjusted to reduce the aging loss of optical fiber drawn from preforms made according to these process steps.

The establishment and adjustment of the oxygen stoichiometry in the selected environment(s) is performed, for example, by varying the oxygen partial pressure within these environments. Such variance is achieved, for example, by adjusting the oxygen flow rate into the selected environment(s). Also, the oxygen stoichiometry is adjusted by the introduction of the oxidation-reduction condition, for example, through the use of oxygen as the oxidation agent and the use of carbon monoxide (CO) as the reduction agent, in the selected environment(s).

Optical fiber made by methods according to embodiments of the invention have improved transmission characteristics. For example, optical fibers made by methods according to embodiments of the invention have transmission loss at 1385 nanometers that is less than 0.33 dB/km and the hydrogen aging loss increase thereafter is less than 0.05 dB/km.

### Brief Description of the Drawings

In the drawings:
Fig. 1 is a simplified block diagram of a method for making optical fibers according to embodiments of the invention;
Fig. 2a is a graphical diagram of the transmission loss of a typical optical fiber at wavelengths ranging from 700-1600 nanometers (nm);
Fig. 2b is a graphical diagram of the transmission loss of an optical fiber within the 700-1600 nm wavelength range according to the methods disclosed in US Patent No. 6,131,415;
Fig. 3a is a graphical diagram of the transmission loss of an aged optical fiber within the 700-1600 nm wavelength range;
Fig. 3b is a graphical diagram of the transmission loss of an aged optical fiber within the 700-1600 nm wavelength range according to the embodiments of the invention;
Fig. 4a is a graphical diagram of the transmission loss of another aged optical fiber within the 700-1600 nm wavelength range;
Fig. 4b is a graphical diagram of the transmission loss of another aged optical fiber within the 700-1600 nm wavelength range according to the embodiments of the invention; and
Fig. 5 is a simplified schematic diagram of an optical system in which embodiments of the invention are useful.

### Detailed Description

In the following description similar components are referred to by the same reference numeral to simplify the sequential aspect of the drawings or to enhance the understanding of the invention through the description of the drawings.

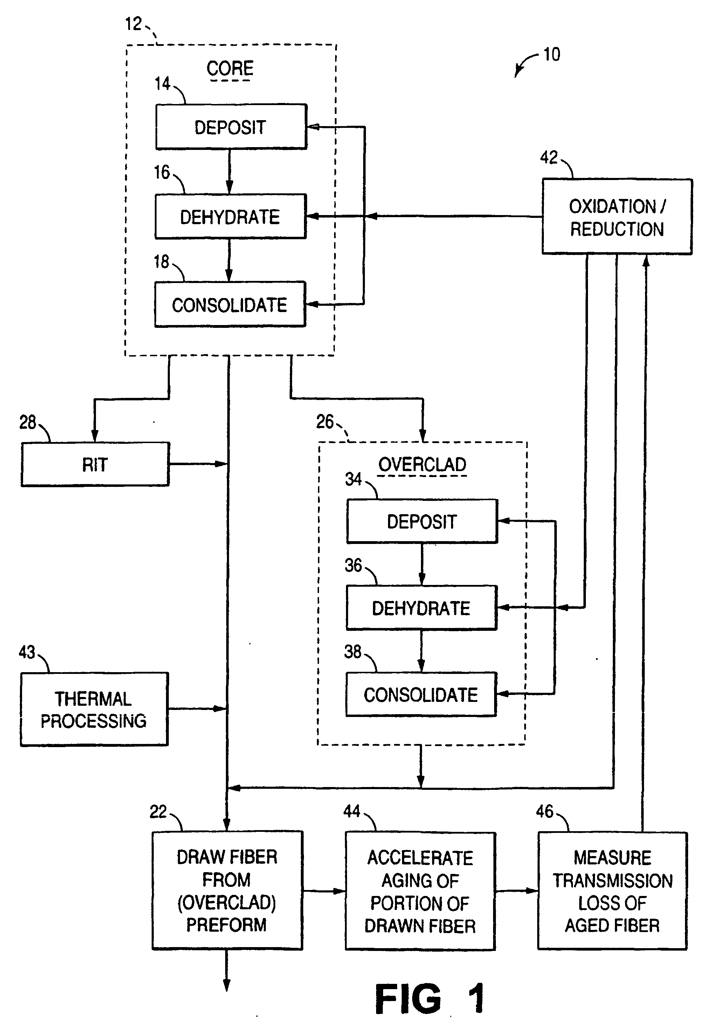

Referring to Fig. 1, shown is a simplified block diagram of a method 10 for making optical fibers including single mode optical fiber according to embodiments of the invention. The method 10 includes a step 12 of forming the core rod portion of a preform from which to draw optical fiber. One typical manner in which the core rod is made includes the soot deposition step 14, the dehydration step 16 and the consolidation step 18.

The soot deposition step 14 includes depositing layers of glass particles (or "soot") on a starter rod such as a silica starter rod to form a glass core rod. In vapor axial deposition (VAD) processes, the soot is deposited on the end surface of the starting rod; in outside vapor deposition (OVD) processes, the soot is deposited on the outer surface of the starting rod. The soot particles involve, for example, vaporized compounds such as germanium, phosphorus and fluorine for index of refraction doping, and silicon tetrachloride (SiCl₄), which reacts with oxygen to form the glass-making component silica (SiO₂).

The dehydration step 16 includes drying or dehydrating the deposited soot. The deposited soot body is removed from the starter rod and traversed through an environment containing drying gases at a temperature of approximately 1200° Celsius (C). Such gases include, for example, oxygen, fluorine, fluorine-containing gases, chlorine, chlorine-containing gases. For purposes of discussion herein, fluorine-containing gases are gases that contain fluorine and are known to be used in dehydration, doping, and etching of silica. Such fluorine-containing gases include, for example, C₂F₆ (Freon 116), SF₆, SiF₄, BF₃, F₂ and other Freons (Freon 14, Freon 13 and Freon 115). Similarly, for purposes of discussion herein, chlorine-containing gases are gases that contain chlorine and are known to be used for doping and/or dehydration. Such chlorine-containing gases include, for example, CCl₄, SiCl₄, SOCl₂ and Cl₂.

Because the core rod at this stage is a porous, sooty body, fluorine or chlorine gas permeates the core rod and removes OH ions therefrom. The rate at which the OH ions are removed depends on, for example, the dehydration temperature, the speed of the body through the dehydrating environment and the gas flow rate of the fluorine or chlorine. OH ions in the optical fiber contribute to OH absorption or "water" absorption, which, as discussed previously herein, contributes to optical fiber transmission loss.

The consolidation step 18 sinters or consolidates the dehydrated core rod. For example, the consolidation step 18 includes traversing the dehydrated core rod through an oxygen and helium environment at a temperature of approximately 1500° C. During this step, the deposited soot particles sinter into a solid, relatively dense glass core rod. Specific details regarding conventional dehydration and consolidation steps are found, for example, in US-A-3,933,454, issued January 20, 1976.

Once the core rod is formed, the next step 22 is to draw optical fiber. Although it is possible to draw optical fiber from the glass core rod, the glass core rod typically is overclad to form an overclad preform before optical fiber is drawn therefrom. Forming an overclad region around the core rod makes for a larger preform, which yields more drawn fiber per preform than smaller, non-overclad preforms.

One or more overclad regions is formed around the core rod, for example, by an overclad soot deposition technique 26 or, alternatively, by a Rod-In-Tube (RIT) technique 28. The overclad soot deposition technique 26 is similar to the soot deposition steps discussed previously herein with respect to making the glass core rod. The overclad soot deposition technique 26 includes a step 34 of depositing glass-making soot particles onto the previously-formed glass core rod, a step 36 of dehydrating the soot particles deposited on the core rod, and a step 38 of consolidating the deposited glass particles onto the core rod to form an overclad core rod.

The RIT technique 28 typically involves the collapse of a tube or sleeve, for example, a silica-based tube or sleeve, around the preform core rod. More specifically, an overclad tube is positioned around the glass core rod and heated along the length thereof to cause it to collapse onto the glass core rod, thus forming the overclad optical fiber preform. For example, see US-A-4,820,322.

The glass-making soot particles are deposited using a process such as VAD or OVD. The deposited soot particles typically involve glass-making compounds such as silicon tetrachloride (SiCl₄) but, unlike the soot particles used to make the core rod, do not usually contain additional doping materials such as germanium, phosphorus and fluorine. Once the overclad soot particles are deposited on the core rod, the overclad soot particles typically are dehydrated, for example, in an environment containing drying gases such as oxygen, fluorine, fluorine-containing gases, chlorine or chlorine-containing gases, at a temperature of approximately 1200° Celsius (C). Dehydration is performed, for example, to remove OH ions from the overclad soot body. As discussed hereinabove, the presence of OH ions in the various regions of the optical fiber preform are problematic. Consolidation occurs, for example, in an oxygen and helium environment at a temperature of approximately 1500° C. Consolidation solidifies the deposited soot layers into an overclad region surrounding the core rod.

Once the optical fiber preform is formed, the step 22 of drawing optical fiber from the preform is performed. The fiber drawing step 22 includes drawing an optical fiber from a heated end of the preform. For example, the preform is suspended vertically and moved into and through a furnace at a controlled rate. The preform softens as it is heated (for example, to approximately 2000° C) and a glass fiber is drawn from a molten end of the preform by a capstan of other suitable device outside of and below the furnace.

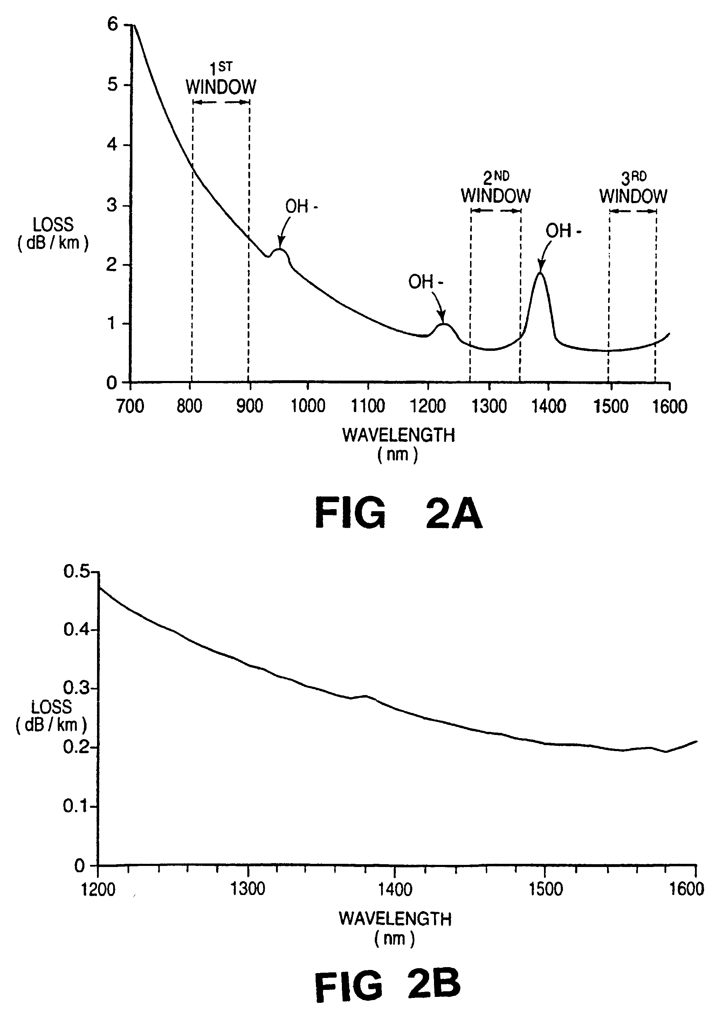

As discussed previously herein, the transmission characteristics of optical fiber are affected by a number of factors, including hydroxyl-ion (OH) absorption ("water" absorption). Within the 700-1600 nm region, water absorption causes loss peaks at approximately 950 nanometers (nm), 1240 nm, and 1385 nm. Such loss peaks are shown clearly, for example, in Fig. 2a, which shows a graphical diagram of the transmission loss of a typical optical fiber at wavelengths ranging from 700-1600 nm. Also, many efforts have been made to reduce the water absorption peaks. See, for example, US-A-6,131,415. Referring now to Fig. 2b, shown is a graphical diagram of the transmission loss of an optical fiber within the 700-1600 nm wavelength range according to the methods disclosed in US-A-6,131,415.

However, another type of absorption loss includes (hydrogen) aging loss. Conventional optical fibers typically experience increased transmission losses as the optical fiber ages. Such is due to the chemical reaction between hydrogen and various defects in the optical fiber during the lifetime of optical fiber. For example, chemical reactions between germanium (Ge) defects in the optical fiber and trace amounts of hydrogen present in the environment surrounding the optical fiber contribute to GeOH losses over the life of the optical fiber.

Moreover, silicon (Si) defects introduced into the optical fiber during the manufacture of the fiber typically cause SiOH and SiH losses in the fiber, which similarly result from the reaction over time between the Si defects and hydrogen present in the fiber (or cable) environment. Unfortunately, SiOH and SiH losses often are greater and occur sooner over the life of the fiber than, for example, the GeOH losses. For example, SiOH aging losses often are up to and even greater than approximately 0.21 dB/km at 1385 nm.

According to embodiments of the invention, the Si defects believed to be responsible for many of the SiOH losses are oxygen-rich defects (Si-O-O-Si defects). The Si-O-O-Si defects are believed to be caused by excess oxygen atoms in the silica glass, for example, manufacturing an optical fiber preform in an environment having too much oxygen. Once these Si-O-O-Si defects are present in the silica glass, subsequent thermal operations (for example, fiber draw) cause a number of the Si-O-O-Si defects to turn into broken Si-O bond defects (Si-O · defects), which become trapped in the fiber. The Si-O · defects, over time, attract hydrogen atoms to form SiOH molecules, which, as discussed hereinabove, cause water absorption losses.

According to embodiments of the invention, the Si defects believed to contribute to SiH losses are oxygen-deficient defects (Si-Si defects). The Si-Si defects are believed to result from manufacturing optical fiber preforms (silica glass) in oxygen-deficient conditions. Subsequent thermal operations cause broken Si bond defects (Si defects) to be formed from some of the Si-Si bond defects. The Si · defects become trapped in the fiber and, as the fiber ages, the Si · defects react with hydrogen atoms to form SiH molecules, which cause an absorption loss peak at 1530 nm.

According to embodiments of the invention, aging losses and other losses are reduced by providing improved oxygen stoichiometry in fiber manufacturing environments to reduce the likelihood of generating oxygen-rich or oxygen-deficient Si defects in optical fiber preforms and optical fibers drawn therefrom that, over time, attract and bond with hydrogen atoms to form molecules that contribute to increased water absorption or other losses. The oxygen conditions are established, for example, through adjustment of the oxygen stoichiometry, at one or more steps during the optical fiber manufacturing process. For example, improved oxygen conditions are provided in the environment in which the core rod is formed and/or in the environment in which the overclad material is formed on the core rod and/or in the environment in which optical fiber is drawn from the preform.

For example, the oxygen partial pressure is established in one or more of the aforementioned environments by, for example, adjustment of the oxygen flow rate into the selected environment(s), to improve the oxygen conditions. Alternatively, the introduction of gases such as carbon monoxide (CO) is used to adjust the reduction conditions in the selected environment(s).

The oxygen stoichiometry in one or more of these environments is adjusted, for example, based on the effects of the previous state of the environment on reducing the defects that contribute to aging loss and other losses in the optical fiber produced in such environments. The effects of oxygen stoichiometry adjustment on the fiber produced are measured, for example, by the transmission losses of at least a representative portion of the optical fiber produced in the oxygen-adjusted environment. Depending on the resulting measurements of the optical fiber, subsequent oxygen stoichiometry adjustments are made. In this manner, adjustment occurs until the oxygen conditions of the various fiber-producing environments are established as desired.

Referring again to Fig. 1, embodiments of the invention include the step 42 of adjusting the oxygen stoichiometry of the desired environment. As shown, the oxygen stoichiometry is adjusted for the environment in which one or more steps 12 of the core rod formation occurs, the environment in which the overclad region formation occurs, and/or the environment in which fiber drawing step 22 occurs. For example, in the step 12 of manufacturing the core rod, the oxygen stoichiometry is adjusted for the environment in which the soot depositing step 14 occurs, and/or the environment in which the dehydration step 16 occurs, and/or the environment in which the consolidation step 18 occurs. Typically, the oxygen stoichiometry is adjusted for the environment in which the dehydration step 16 occurs. However, it is understood that embodiments of the invention include adjusting the oxygen stoichiometry of the environments in which any of the core rod formation process steps occur.

Also, as shown, the adjusting step 42 adjusts the oxygen stoichiometry in the environment in which the overclad soot depositing step 34 occurs, and/or the environment in which the overclad (deposited soot) dehydration step 36 occurs, and/or the environment in which the overclad consolidation step 38 occurs. Typically, the adjusting step 42 adjusts the oxygen stoichiometry of the environment in which the overclad dehydration step 36 occurs. However, it is understood that embodiments of the invention include adjusting the oxygen stoichiometry of the environments in which any of the overclad region formation process steps occur.

Also, as shown, the adjusting step 42 adjusts the oxygen stoichiometry of the environment in which the drawing step 22 is performed. That is, according to embodiments of the invention, adjusting step 42 includes adjusting the oxygen stoichiometry, for example, within the draw furnace or during the step 22 of drawing optical fiber from the preform. It should be understood that embodiments of the invention include adjusting the oxygen stoichiometry of any environment in which the fiber drawing step 22 occurs. According to embodiments of the invention, adjusting the oxygen stoichiometry reduces the probability of broken bonds from oxygen-rich or oxygen-deficient defects, for example, as discussed hereinabove. Furthermore, the probability of broken bonds are further reduced by an annealing or other thermal processing step 43.

Referring again to Fig. 1, according to embodiments of the invention, the oxygen stoichiometry within one or more environment is established, for example, through adjustment, based on the aging loss of at least a representative portion of the optical fiber produced within a previously-established oxygen environment. For example, once the optical fiber is drawn from the preform (step 22), an accelerated aging step 44 ages at least a representative portion of the drawn optical fiber. For example, the aging step 44 exposes the portion of drawn optical fiber to an environment having approximately 1% hydrogen, at room temperature, for approximately 4 to 6 days.

Once the portion of optical fiber has been aged, a measuring step 46 measures or otherwise determines the transmission loss of the aged fiber. For example, the measuring step 46 determines the transmission loss of the optical fiber within the 700-1600 nm region. The transmission loss of the representative portion of the fiber provides an indication as to how the fiber will perform as it ages. Depending on the results, the oxygen stoichiometry of one or more environments discussed hereinabove is adjusted as needed. For example, if the oxygen content in the environment is to be increased, the oxygen flow rate into the environment is increased; if the oxygen content is to be reduced, the oxygen flow rate is reduced. Also, for example, if the oxygen content is to be reduced, reducing gases such as CO are or can be introduced into the selected environment.

After any oxygen-stoichiometry adjustments are made, the fiber-making process steps are performed, for example, as discussed hereinabove, to manufacture subsequent core rods and overclad regions. The optical fiber manufactured by the processing steps take into account the oxygen-stoichiometry adjustment(s) that were made previously. Then, at least another representative portion of the resulting optical fiber is tested, for example, by prematurely aging the fiber portion and measuring the transmission loss thereof. Based on the transmission loss results, the oxygen stoichiometry of one or more processing environments is adjusted. According to embodiments of the invention, the iterative process just described continues as desired to improve the transmission performance of the manufactured optical fiber. For example, according to embodiments of the invention, optical fiber has been manufactured that exhibits transmission loss (at 1385 nm) that is less than 0.33 dB/km and the hydrogen aging loss increase thereafter is less than 0.05 dB/km.

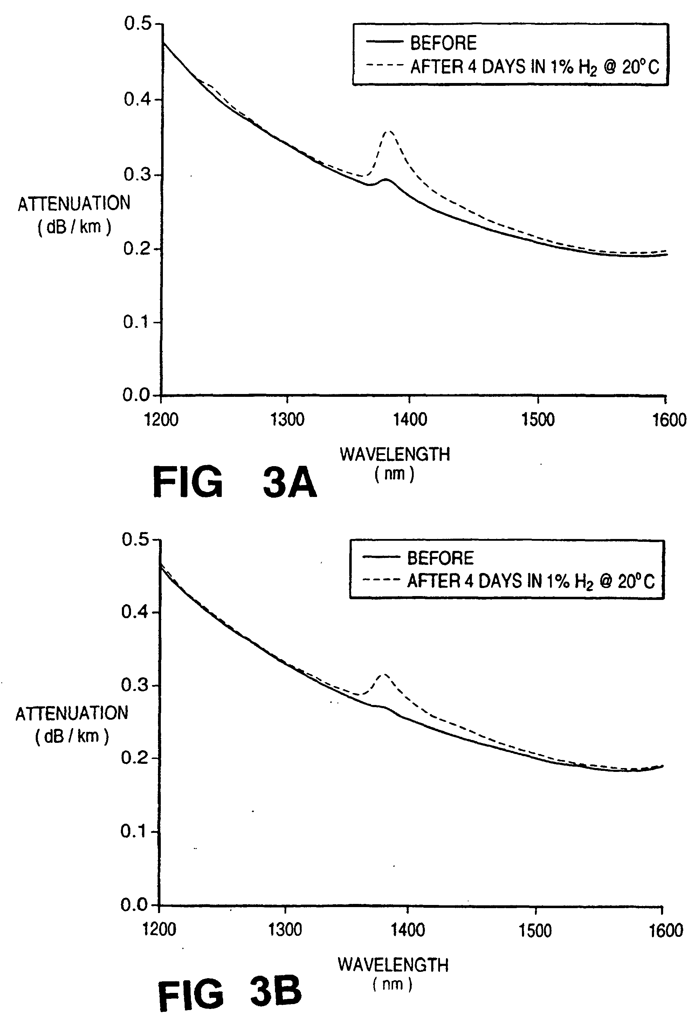

Figs 3a-b illustrate graphically the results of embodiments of the invention. Fig. 3a depicts the transmission loss of a hydrogen-aged fiber that previously was made by a manufacturing process without any oxygen stoichiometry adjustments. Fig. 3b graphically illustrates the transmission loss of a hydrogen-aged fiber that previously was made by a manufacturing process after an oxygen adjustment was made to the adjusting step 16.

Prior to adjustment, the dehydrating step 16 for the core rod formation included traversing the soot body at 8 millimeters per minute (mm/min.) through a dehydrating environment of helium, oxygen and chlorine at a temperature of 1530° C. The flow rate for helium was 10 standard liters per minute (slm), the flow rate for oxygen was 8 slm, and the flow rate for chlorine was 0.7 slm.

The remaining preform manufacturing steps were performed, for example, as discussed hereinabove. Fiber drawn from the preform was tested before and after hydrogen aging. The hydrogen aging involved subjecting the fiber to a 1% hydrogen environment at room temperature for 4 to 6 days. The hydrogen-aged fiber had experienced an increased loss of 0.06 dB/km at 1385 nm. See, for example, Fig. 3a.

Then, in accordance with embodiments of the invention, the oxygen flow rate during the dehydrating step 16 was adjusted, for example, to 4 slm. The remaining preform manufacturing steps were kept the same. Fiber drawn from the preform made by the adjusted process was hydrogen aged in the same manner (that is, 1% hydrogen environment at room temperature for 4 to 6 days). However, fiber drawn from the preform made by the adjusted process experienced a transmission loss at 1385 nm of only 0.04 dB/km. See, for example, Fig. 3b.

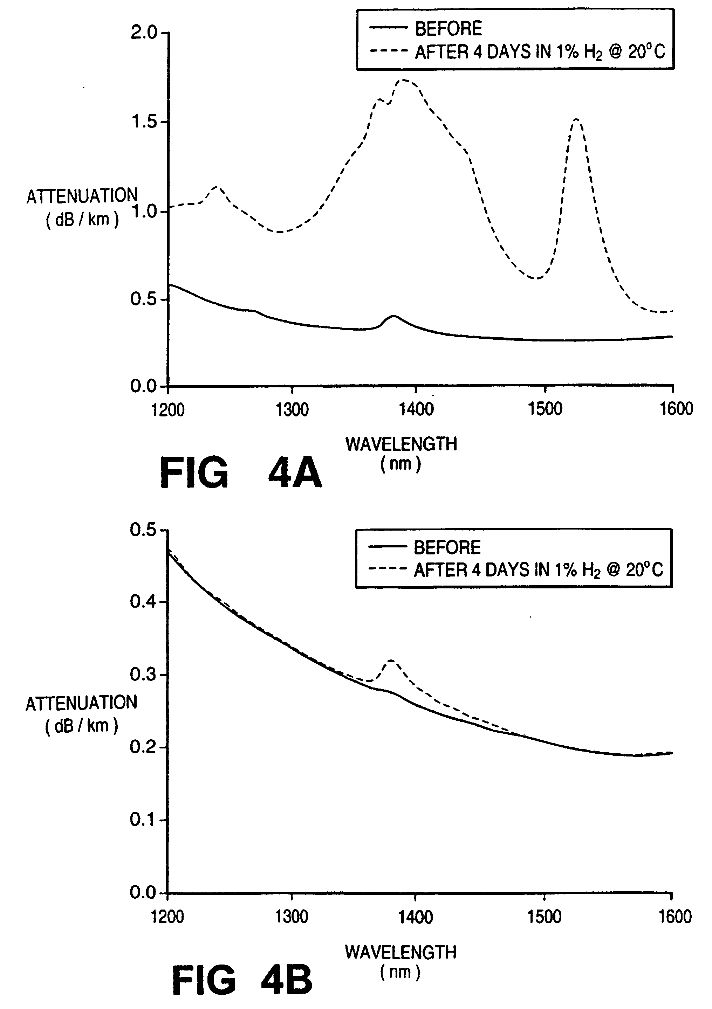

In another example, Fig. 4a shows the transmission loss of a hydrogen-aged fiber made by a manufacturing process that did not have oxygen stoichiometry adjustments. Fig. 4b shows the transmission loss of a hydrogen-aged fiber made by a manufacturing process in which at least one oxygen stoichiometry adjustment was made. More specifically, at least one oxygen adjustment was made to the core consolidation step 18.

Prior to adjustment, the consolidation step 18 included traversing the dehydrated soot body at 8 mm/min. through a consolidating environment of helium and oxygen at a temperature of 1530° C. The flow rate for helium was 10 slm, and the flow rate for oxygen was 2 slm. The consolidated preform core rod was formed into a preform, for example, in a manner as discussed hereinabove. The difference in transmission loss of fiber drawn from the preform before and after hydrogen aging was approximately 1.0 dB/km at 1385 nm. See, for example, Fig. 4a.

However, in accordance with embodiments of the invention, the oxygen flow rate during the core rod consolidation step 18 was adjusted, for example, to 0 slm. The remaining preform manufacturing steps were kept the same. Fiber drawn from the preform made by the adjusted process was hydrogen aged in the same manner. However, when tested, the difference in transmission loss of fiber drawn from the preform made by the adjusted process before and after hydrogen aging was only 0.04 dB/km at 1385 nm. See, for example, Fig. 4b.

Thus, Figs. 3a-b and Figs. 4a-b demonstrate the improvement in transmission characteristics of hydrogen-aged optical fibers drawn from preforms manufactured by processes in which the oxygen stoichiometry has been adjusted. As discussed hereinabove, the oxygen stoichiometry adjustments occur at one or more steps in the process, and are based on transmission loss results of fibers drawn from preforms manufactured by previously adjusted or unadjusted process steps.

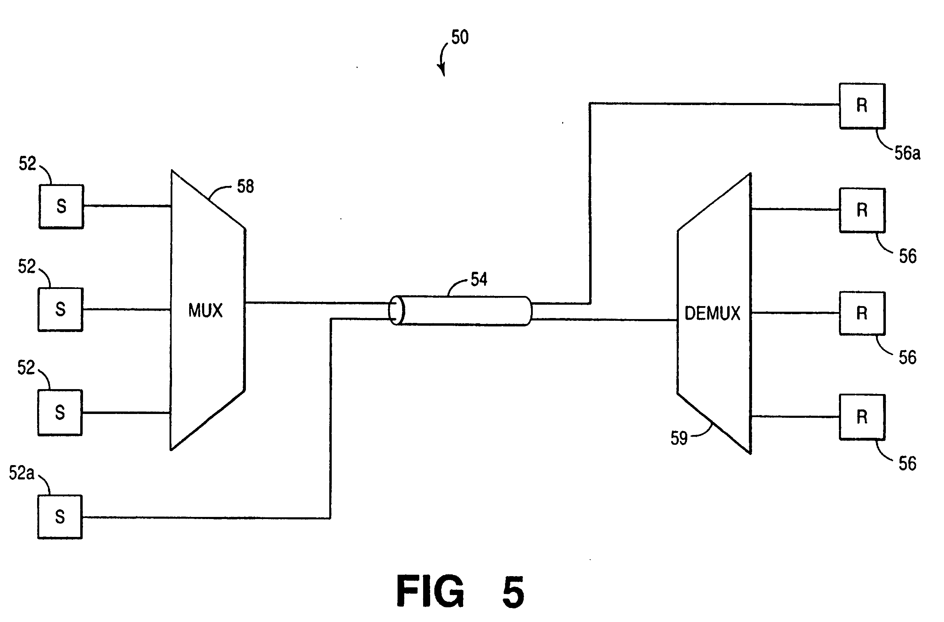

Referring now to Fig. 5, shown is a simplified schematic diagram of an optical system 50 in which embodiments of the invention are useful. The optical communications system 50 includes one or more optical sources 52 coupled, for example, in a conventional manner, to one or more optical fibers 54. The optical fibers 54 are coupled to one or more optical detectors or receivers 56, for example, in a conventional manner. The optical sources 52 and the optical receivers 56 operably connect to the optical fibers 54 directly (see, for example, source 52ₐ and receiver 56ₐ), or through a multiplexer 58 (on the source side of the system) or a demultiplexer 59 (on the receiver side of the system).

One or more of the optical fibers 54 are manufactured in accordance with embodiments of the invention, for example, as discussed hereinabove. That is, at least one of the optical fibers 54 are made in one or more process environments in which the oxygen stoichiometry was established, for example, through adjustment, to reduce defects that contribute to aging loss and other losses. The optical fiber 54 manufactured according to embodiments of the invention typically has transmission losses less than 0.33 dB/km at 1385 nm, and the hydrogen aging loss increase thereafter is less than 0.05 dB/km.

It will be apparent to those skilled in the art that many changes and substitutions can be made to the embodiments of the optical fiber and optical fiber fabrication methods herein described without departing from the scope of the appended claims.

## Claims

1. A method for making optical fiber, the method comprising the steps of:
(a) forming an optical fiber soot preform, including depositing soot on a substrate, the deposited soot having a core region surrounded by a cladding region;
(b) dehydrating the deposited soot in a first atmosphere including oxygen and at least one of fluorine, fluorine-containing gases, chlorine, chlorine-containing gases and carbon monoxide, wherein the partial pressure of oxygen is controllable;
(c) consolidating the optical fiber soot preform to form an optical fiber preform;
(d) drawing fiber from the optical fiber preform;
**CHARACTERIZED IN THAT**
the method further comprises the steps of
(e) exposing at least one portion of the drawn optical fiber to hydrogen to prematurely age the at least one portion of the drawn optical fiber;
(f) measuring the transmission loss over an operable wavelength range of the aged portion of optical fiber;
(g) adjusting, based on the measured transmission loss, the partial pressure of the oxygen in the first atmosphere to reduce the transmission loss associated with hydrogen aging; and
(h) repeating at least steps (a) through (d).

2. The method as recited in claim 1, further comprising, after the dehydrating step and after the consolidating step, the step of forming an overclad region around the optical fiber preform to form an overclad optical fiber preform, and wherein the fiber drawing step comprises drawing fiber from the overclad optical fiber preform.

3. The method as recited in claim 2, wherein the overclad forming step further comprises the steps of:
depositing soot around the optical fiber preform;
dehydrating the deposited soot in a second atmosphere including oxygen and at least one of fluorine, fluorine-containing gases, chlorine, chlorine-containing gases and carbon monoxide, wherein the partial pressure of oxygen in the second atmosphere is controllable; and
consolidating the deposited soot around the optical fiber preform.

4. The method as recited in claim 3, further comprising the step of adjusting, based on the measured transmission loss, the partial pressure of oxygen in the second atmosphere during the overclad forming step.

5. The method as recited in claim 2, wherein the soot deposition in the overclad forming step is outside vapor deposition.

6. The method as recited in claim 2, wherein the overclad forming step further comprises the steps of:
positioning an overclad tube around the optical fiber preform; and
heating the overclad tube along the length thereof in such a way that the overclad tube collapses onto the optical fiber preform to form the overclad optical fiber preform.

7. The method as recited in claim 1, wherein the exposing step further comprises exposing the at least one portion of the drawn optical fiber to a 1% hydrogen environment at room temperature for a period of time of approximately 4 to 6 days.

8. A method for making optical fiber, the method comprising the steps of:
(a) forming a glass core rod having a core region surrounded by a cladding region in a first atmosphere;
(b) forming an overclad region around the glass core rod to form an overclad optical fiber preform,
wherein the overclad region forming step includes depositing soot around the glass core rod, dehydrating the deposited soot in a second atmosphere including oxygen and at least one of fluorine, fluorine-containing gases, chlorine, chlorine-containing gases and carbon monoxide, wherein the partial pressure of oxygen is controllable, and consolidating the deposited soot around the glass core rod;
(c) drawing fiber from the overclad optical fiber preform;
**CHARACTERIZED IN THAT**
the method further comprises the steps of
(d) exposing at least one portion of the drawn optical fiber to hydrogen to prematurely age the at least one portion of the drawn optical fiber;
(e) measuring the transmission loss over an operable wavelength region of the aged portion of optical fiber;
(f) adjusting, based on the measured transmission loss, the partial pressure of oxygen in the second atmosphere to reduce the transmission loss associated with hydrogen aging; and
(g) repeating at least steps (a) through (c).

## Patentansprüche

1. Ein Verfahren zum Herstellen einer optischen Faser, wobei das Verfahren folgende Schritte aufweist:
(a) Bilden einer Ruß-Vorform einer optischen Faser, das das Aufbringen von Ruß auf ein Substrat umfaßt, wobei der aufgebrachte Ruß eine Kernregion aufweist, die durch eine Mantelregion umgeben ist;
(b) Dehydratisieren des aufgebrachten Rußes in einer ersten Atmosphäre, die Sauerstoff und zumindest eines aus Fluor, fluorenthaltenden Gasen, Chlor, chlorenthaltenden Gasen und Kohlenstoffmonoxid umfaßt, wobei der Sauerstoffteildruck steuerbar ist;
(c) Konsolidieren der Ruß-Vorform der optischen Faser, um eine Vorform der optischen Faser zu bilden;
(d) Ziehen der Faser von der Vorform der optischen Faser;
**dadurch gekennzeichnet, daß**
das Verfahren ferner folgende Schritte aufweist:
(e) Aussetzen von zumindest einem Abschnitt der gezogenen optischen Faser Wasserstoff, um den zumindest einen Abschnitt der gezogenen optischen Faser verfrüht zu altern;
(f) Messen des Übertragungsverlusts über einen wirksamen Wellenlängenbereich des gealterten Abschnitts der optischen Faser;
(g) Anpassen, basierend auf dem gemessenen Übertragungsverlust, des Sauerstoffteildrucks in der ersten Atmosphäre, um den Übertragungsverlust zu reduzieren, der der Wasserstoffalterung zugeordnet ist; und
(h) Wiederholen von zumindest den Schritten (a) bis (d).

2. Das Verfahren gemäß Anspruch 1, das ferner nach dem Dehydratisierungsschritt und nach dem Konsolidierungsschritt den Schritt des Bildens einer Übermantelungsregion um die Vorform der optischen Faser aufweist, um eine übermantelte Vorform der optischen Faser zu bilden, und wobei der Faserziehschritt das Ziehen der Faser aus der übermantelten Vorform der optischen Faser aufweist.

3. Das Verfahren gemäß Anspruch 2, bei dem der Übermantelungsbildungsschritt ferner folgende Schritte aufweist:
Aufbringen von Ruß um die Vorform der optischen Faser;
Dehydratisieren des aufgebrachten Rußes in einer zweiten Atmosphäre, die Sauerstoff und zumindest eines aus Fluor, fluorenthaltenden Gasen, Chlor, chlorenthaltenden Gasen und Kohlenstoffmonoxid umfaßt, wobei der Sauerstoffteildruck in der zweiten Atmosphäre steuerbar ist; und
Konsolidieren des aufgebrachten Rußes um die Vorform der optischen Faser.

4. Das Verfahren gemäß Anspruch 3, das ferner den Schritt des Anpassens, basierend auf dem gemessenen Übertragungsverlust, des Sauerstoffteildrucks in der zweiten Atmosphäre während des Übermantelungsbildungsschrittes aufweist.

5. Das Verfahren gemäß Anspruch 2, bei dem die Rußaufbringung bei dem Übermantelungsbildungsschritt eine Außendampfaufbringung ist.

6. Das Verfahren gemäß Anspruch 2, bei dem der Übermantelungsbildungsschritt ferner folgende Schritte aufweist:
Positionieren einer Übermantelungsröhre um die Vorform der optischen Faser; und
Erwärmen der Übermantelungsröhre entlang der Länge derselben auf solche Weise, daß die Übermantelungsröhre auf die Vorform der optischen Faser zusammenfällt, um die übermantelte Vorform der optischen Faser zu bilden.

7. Das Verfahren gemäß Anspruch 1, bei dem der Aussetzungsschritt ferner das Aussetzen des zumindest einen Abschnitts der gezogenen optischen Faser einer 1%-Wasserstoffumgebung bei Raumtemperatur für eine Zeitperiode von ungefähr 4 bis 6 Tagen aufweist.

8. Ein Verfahren zum Herstellen einer optischen Faser, wobei das Verfahren folgende Schritte aufweist:
(a) Bilden eines Glaskernstabs, der eine Kernregion aufweist, die durch eine Mantelregion umgeben ist, in einer ersten Atmosphäre;
(b) Bilden einer übermantelten Region um den Glaskernstab, um eine übermantelte Vorform der optischen Faser zu bilden,
wobei der Bildungsschritt der übermantelten Region das Aufbringen von Ruß um den Glaskernstab und das Dehydratisieren des aufgebrachten Rußes in einer zweiten Atmosphäre, die Sauerstoff und zumindest eines aus Fluor, fluorenthaltenden Gasen, Chlor, chlorenthaltenden Gasen und Kohlenstoffmonoxid umfaßt, wobei der Sauerstoffteildruck steuerbar ist, und das Konsolidieren des aufgebrachten Rußes um den Glaskernstab umfaßt;
(c) Ziehen der Faser von der übermantelten Vorform der optischen Faser;
**dadurch gekennzeichnet, daß**
das Verfahren ferner folgende Schritte aufweist:
(d) Aussetzen von zumindest einem Abschnitt der gezogenen optischen Faser Wasserstoff, um den zumindest einen Abschnitt der gezogenen optischen Faser verfrüht zu altern;
(e) Messen des Übertragungsverlusts über eine wirksame Wellenlängenregion des gealterten Abschnitts der optischen Faser;
(f) Anpassen, basierend auf dem gemessenen Übertragungsverlust, des Sauerstoffteildrucks in der zweiten Atmosphäre, um den Übertragungsverlust zu reduzieren, der der Wasserstoffalterung zugeordnet ist; und
(g) Wiederholen von zumindest den Schritten (a) bis (c) .

## Revendications

1. Procédé de fabrication de fibre optique, le procédé comprenant les étapes consistant à :
(a) former une préformer de suie de fibre optique, comportant le dépôt de suie sur un substrat, la suie déposée présentant une région de noyau entourée d'une région de revêtement ;
(b) déshydrater la suie déposée dans un premier milieu comportant de l'oxygène et au moins l'un parmi fluor, gaz contenant du fluor, chlore, gaz contenant du chlore et monoxyde de carbone, où la pression partielle d'oxygène est contrôlable ;
(c) consolider la préforme de suie de fibre optique, pour former une préforme de fibre optique ;
(d) étirer la fibre à partir de la préforme de fibre optique ;
**caractérisé par le fait que** le procédé comprend, par ailleurs, les étapes consistant à
(e) exposer au moins une partie de la fibre optique étirée à de l'hydrogène, pour vieillir prématurément l'au moins une partie de la fibre optique étirée ;
(f) mesurer la perte de transmission sur une plage de longueurs d'onde de fonctionnement de la partie de fibre optique vieillie ;
(g) ajuster, sur base de la perte de transmission mesurée, la pression partielle de l'oxygène dans le premier milieu, pour réduire la perte de transmission associée au vieillissement par hydrogène ; et
(h) répéter au moins les étapes (a) à (d).

2. Procédé selon la revendication 1, comprenant, par ailleurs, après l'étape de déshydratation et après l'étape de consolidation, l'étape consistant à former une région de surrevêtement autour de la préforme de fibre optique, pour former une préforme de fibre optique surrevêtue, et dans lequel l'étape d'étirage de la fibre comprend l'étirage de la fibre à partir de la préforme de fibre optique surrevêtue.

3. Procédé selon la revendication 2, dans lequel l'étape de formation du surrevêtement comprend, par ailleurs, les étapes consistant à :
déposer de la suie autour de la préforme de fibre optique ;
déshydrater la suie déposée dans un second milieu comportant de l'oxygène et au moins l'un parmi fluor, gaz contenant du fluor, chlore, gaz contenant du chlore et monoxyde de carbone, où la pression partielle d'oxygène dans le second milieu est contrôlable ; et
consolider la suie déposée autour de la préforme de fibre optique.

4. Procédé selon la revendication 3, comprenant, par ailleurs, l'étape consistant à régler, sur base de la perte de transmission mesurée, la pression partielle d'oxygène dans le second milieu pendant l'étape de formation du surrevêtement.

5. Procédé selon la revendication 2, dans lequel le dépôt de suie à l'étape de formation du surrevêtement est un dépôt extérieur à la vapeur.

6. Procédé selon la revendication 2, dans lequel l'étape de formation du surrevêtement comprend, par ailleurs, les étapes consistant à :
positionner un tube de surrevêtement autour de la préforme de fibre optique ; et
chauffer le tube de surrevêtement sur sa longueur, de manière que le tube de surrevêtement s'écrase sur la préforme de fibre optique, pour former la préforme de fibre optique surrevêtue.

7. Procédé selon la revendication 1, dans lequel l'étape d'exposition comprend, par ailleurs, l'exposition de l'au moins une partie de la fibre optique étirée à un milieu à 1% d'hydrogène à température ambiante pendant un laps de temps d'environ 4 à 6 jours.

8. Procédé de fabrication de fibre optique, le procédé comprenant les étapes consistant à :
(a) former une tige de noyau en verre présentant une région de noyau entourée d'une région de revêtement dans un premier milieu ;
(b) former une région de surrevêtement autour de la tige de noyau en verre, pour former une préforme de fibre optique surrevêtue,
où l'étape de formation de la région de surrevêtement comporte le dépôt de suie autour de la tige de noyau en verre, la déshydratation de la suie déposée dans un second milieu comportant de l'oxygène et au moins l'un parmi fluor, gaz contenant du fluor, chlore, gaz contenant du chlore et monoxyde de carbone, où la pression partielle d'oxygène est contrôlable, et la consolidation de la suie déposée autour de la tige de noyau en verre ;
(c) étirer la fibre à partir de la préforme de fibre optique surrevêtue ;
**caractérisé en ce que** le procédé comprend, par ailleurs, les étapes consistant à
(d) exposer au moins une partie de la fibre optique étirée à de l'hydrogène, pour vieillir prématurément l'au moins une partie de la fibre optique étirée ;
(e) mesurer la perte de transmission sur une plage de longueurs d'onde de fonctionnement de la partie de fibre optique vieillie ;
(f) ajuster, sur base de la perte de transmission mesurée, la pression partielle de l'oxygène dans le second milieu, pour réduire la perte de transmission associée au vieillissement par hydrogène ; et
(g) répéter au moins les étapes (a) à (c).
